# EUROPEAN PATENT APPLICATION

(11) **EP 4 506 427 A1**
(43) Date of publication of application: **12.02.2025**
(21) Application number: 23784711.6
(22) Date of filing: 31.03.2023
(51) Int. Cl.: C09D 11/38, B41M 5/00, B41J 2/01

(54) **AQUEOUS INK FOR INKJET RECORDING, FIXING AGENT, INKJET RECORDING METHOD, INKJET RECORDING DEVICE, AND INK HOLDING CONTAINER**

(30) Priority: 08.04.2022 JP 2022064541
(71) Applicant: BROTHER KOGYO KABUSHIKI KAISHA, Nagoya-shi, Aichi 467-8561 (JP)
(72) Inventor: ISOGAI Masato, Nagoya-shi, Aichi 467-8562 (JP); TSUZAKA Yuka, Nagoya-shi, Aichi 467-8562 (JP); MAEDA Mitsunori, Nagoya-shi, Aichi 467-8562 (JP)
(74) Representative: Prüfer & Partner mbB Patentanwälte · Rechtsanwälte
(86) International application number: PCT/JP2023/013544
(87) International publication number: WO 2023/195424

(57) **Abstract**

An aqueous ink for inkjet recording including a polylactic acid as a fixing agent. An aqueous ink for ink jet recording including water; a coloring agent; and a fixing agent, in which the fixing agent contains a polylactic acid.

## Description

### TECHNICAL FIELD

The present invention relates to an aqueous ink for ink jet recording, a fixing agent, an inkjet recording method, an inkjet recording device, and an ink storage container.

### BACKGROUND ART

Examples of an aqueous ink for ink jet recording generally include one described in Patent Literature 1.

### CITATION LIST

### PATENT LITERATURE

Patent Literature 1: JP2003-127351A

### SUMMARY OF INVENTION

### TECHNICAL PROBLEM

In response to increased awareness of environmental issues in recent years, an aqueous ink for ink jet recording is also required to reduce environmental impact thereof.

Therefore, an object of the present invention is to provide an aqueous ink for ink jet recording that can contribute to reducing environmental impact.

### SOLUTION TO PROBLEM

In order to achieve the above object, an aqueous ink for ink jet recording according to the present invention contains: water; a coloring agent; and a fixing agent, in which the fixing agent contains a polylactic acid.

### ADVANTAGEOUS EFFECTS OF INVENTION

Since the fixing agent contains a polylactic acid having biodegradability, the aqueous ink for ink jet recording according to the present invention can contribute to reducing environmental impact.

### BRIEF DESCRIPTION OF DRAWINGS

FIGURE is a schematic perspective view showing a configuration of an example of an inkjet recording device according to the present invention.

### DESCRIPTION OF EMBODIMENTS

In the present invention, "mass" may be referred to as "weight" unless otherwise specified. For example, "mass ratio" may be referred to as "weight ratio" unless otherwise specified, and "mass%" may be referred to as "wt%" unless otherwise specified.

An aqueous ink for ink jet recording according to the present invention (hereinafter, sometimes referred to as an "aqueous ink" or an "ink") will be described. The aqueous ink according to the present invention contains water, a coloring agent, and a fixing agent, in which the fixing agent contains a polylactic acid.

The coloring agent may include, for example, a pigment, or a dye.

The pigment is not particularly limited, and examples thereof include carbon black, an inorganic pigment, and an organic pigment. Examples of the carbon black include furnace black, lamp black, acetylene black, and channel black. Examples of the inorganic pigment include titanium oxide, an iron oxide-based inorganic pigment, and a carbon black-based inorganic pigment. Examples of the organic pigment include: azo pigments such as azo lake, an insoluble azo pigment, a condensed azo pigment, and a chelate azo pigment; polycyclic pigments such as a phthalocyanine pigment, a perylene and perinone pigment, an anthraquinone pigment, a quinacridone pigment, a dioxazine pigment, a thioindigo pigment, an isoindolinone pigment, and a quinophthalone pigment; dye lake pigments such as a basic dye lake pigment and an acid dye lake pigment; nitro pigments; nitroso pigments; and aniline black daylight fluorescent pigments. Other pigments may be used as long as the pigment can be dispersed in an aqueous phase. Specific examples of these pigments include: C.I. Pigment Black 1, 6, and 7; C.I. Pigment Yellow 1, 2, 3, 12, 13, 14, 15, 16, 17, 55, 74, 78, 150, 151, 154, 180, 185, and 194; C.I. Pigment Orange 31 and 43; C.I. Pigment Red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C.I. Pigment Violet 19 and 196; C.I. Pigment Blue 1, 2, 3, 15, 15:1, 15:2, 15:3, 15:4, 16, 22, and 60; C.I. Pigment Green 7 and 36; and solid solutions of these pigments.

The pigment may be, for example, one that is dispersed in a solvent using a resin dispersant (also referred to as a resin dispersion pigment). As the resin dispersant, for example, a general polymer dispersant (also referred to as a resin for pigment dispersion or a resin dispersant) may be used, and the resin dispersant may be prepared. In addition, in the aqueous ink according to the present invention, the pigment may be encapsulated with a polymer. As the resin dispersant, for example, those containing at least one of methacrylic acid and acrylic acid as a monomer can be used, and for example, a commercially available product may be used. The resin dispersant may be, for example, a block copolymer, a graft copolymer, or a random copolymer made of hydrophobic monomers such as styrene, a styrene derivative, vinylnaphthalene, a vinylnaphthalene derivative, aliphatic alcohol esters of α,β-ethylenically unsaturated carboxylic acids, or two or more monomers selected from the group consisting of acrylic acid, an acrylic acid derivative, maleic acid, a maleic acid derivative, itaconic acid, an itaconic acid derivative, fumaric acid, and a fumaric acid derivative, or a salt thereof. Examples of the commercially available product include: "Joncryl (registered trademark) 611", "Joncryl (registered trademark) 60", "Joncryl (registered trademark) 586", "Joncryl (registered trademark) 687", "Joncryl (registered trademark) 63", and "Joncryl (registered trademark) HPD296" manufactured by Johnson Polymer Co., Ltd.; "Disperbyk 190" and "Disperbyk 191" manufactured by BYK; and "Solsperse 20000" and "Solsperse 27000" manufactured by Zeneca Corporation.

Examples of a method for dispersing the pigment using the resin for pigment dispersion include dispersing the pigment using a dispersing device. The dispersing device used for dispersing the pigment is not particularly limited as long as the dispersing device is a general disperser, and examples thereof include a ball mill, a roll mill, and a sand mill (for example, a high-speed type sand mill).

The pigment may be a self-dispersion type pigment. The self-dispersion type pigment can be dispersed in water without using a dispersant, for example, by introducing at least one of a hydrophilic functional group such as a carbonyl group, a hydroxy group, a carboxylic acid group, a sulfonic acid group, and a phosphoric acid group, and a salt thereof into pigment particles by chemical bonding, either directly or through other groups. As the self-dispersion type pigment, for example, pigments treated by methods described in JPH08-3498A, JP2000-513396A, JP2008-524400A, JP2009-515007A, and JP2011-515535A can be used. As a raw material of the self-dispersion type pigment, either an inorganic pigment or an organic pigment can be used. In addition, examples of the pigment suitable for the treatment include carbon black such as "MA8" and "MA100" manufactured by Mitsubishi Chemical Corporation. The self-dispersion type pigment may be, for example, a commercially available product. Examples of the commercially available product include: "CAB-O-JET (registered trademark) 200", "CAB-O-JET (registered trademark) 250C", "CAB-O-JET (registered trademark) 260M", "CAB-O-JET (registered trademark) 270Y", "CAB-O-JET (registered trademark) 300", "CAB-O-JET (registered trademark) 400", "CAB-O-JET (registered trademark) 450C", "CAB-O-JET (registered trademark) 465M", and "CAB-O-JET (registered trademark) 470Y" manufactured by Cabot Corporation; "BONJET (registered trademark) BLACK CW-2" and "BONJET (registered trademark) BLACK CW-3" manufactured by ORIENT CHEMICAL INDUSTRIES CO., LTD; and "LIOJET (registered trademark) WD BLACK 002C" manufactured by TOYO INK CO., LTD.

As described above, the fixing agent contains a polylactic acid. An origin of a raw material of the polylactic acid is not particularly limited, and the polylactic acid may be, for example, a plant-derived polylactic acid or a non-plant-derived (chemically synthesized) polylactic acid. The plant-derived polylactic acid is produced, for example, from starch or sugar. Using the plant-derived polylactic acid can also contribute to reducing CO2 emissions.

The fixing agent may contain a component other than the polylactic acid. The component other than the polylactic acid is not particularly limited, and may be, for example, a fixing agent synthesized from a raw material derived from chemical synthesis.

The fixing agent is for fixing the coloring agent to a recording medium. The recording medium is not particularly limited, and examples thereof include a recording sheet.

The water may be ion exchange water, pure water, or the like.

The water may be a main solvent. In the present invention, the term "main solvent" refers to the most abundant component among components constituting the solvent. A blending amount (water proportion) of the water with respect to a total amount of the aqueous ink is appropriately determined according to desired ink properties and the like. The water proportion may be, for example, the balance except for other components. For example, the blending amount of the water is 50 mass% to 95 mass%, preferably 55 mass% to 90 mass%, and more preferably 60 mass% to 80 mass%.

An addition amount of the polylactic acid to the total amount of the aqueous ink is not particularly limited, and for example, may be 2.5 mass% or more, or 3 mass% or more, and may be 10 mass% or less, 7 mass% or less, or 5 mass% or less. For example, it is 2.5 wt% to 10 wt%, preferably 3 wt% to 10 wt%, and more preferably 3 wt% to 7 wt%.

A mass ratio (A/B) of a content (A) of the pigment to a content (B) of the polylactic acid in the total amount of the aqueous ink is not particularly limited, and is, for example, 0.25 to 1.0, preferably 0.5 to 0.85, and more preferably 0.5 to 0.83.

A viscosity of the aqueous ink may be, for example, 20 mPa s or less, 10 mPa s or less, 7 mPa·s or less, or 5 mPa·s or less, and may be 1 mPa·s or more, or 2 mPa·s or more. For example, it is 1 mPa·s to 20 mPa·s, and preferably 2 mPa·s to 10 mPa·s.

The aqueous ink may further contain a wetting agent, for example.

The wetting agent is not particularly limited, and examples thereof include: lower alcohols such as methyl alcohol, ethyl alcohol, n-propyl alcohol, isopropyl alcohol, n-butyl alcohol, sec-butyl alcohol, and tert-butyl alcohol; amides such as dimethylformamide and dimethylacetamide; ketones such as acetone; keto alcohols such as diacetone alcohol; ethers such as tetrahydrofuran and dioxane; polyethers such as a polyalkylene glycol; alkylene glycols; polyhydric alcohols such as glycerin, trimethylolpropane, and trimethylolethane; 2-pyrrolidone; N-methyl-2-pyrrolidone; and 1,3-dimethyl-2-imidazolidinone. Examples of the polyalkylene glycol include polyethylene glycol and polypropylene glycol. Examples of the alkylene glycol include ethylene glycol, propylene glycol, butylene glycol, diethylene glycol, triethylene glycol, dipropylene glycol, tripropylene glycol, thiodiglycol, and hexylene glycol. These wetting agents may be used alone or in combination of two or more types thereof. Among them, alkylene glycols and polyhydric alcohols such as glycerin are preferred.

The aqueous ink may further contain, for example, a surfactant.

The surfactant is not particularly limited and may be appropriately selected depending on a purpose, and, for example, a commercially available product may be used. Specific examples of the surfactant include a silicone-based surfactant and an acetylene-based surfactant.

Examples of a commercially available product of the silicone-based surfactant include "SILFACE (registered trademark) SAG002", "SILFACE (registered trademark) SAG005", and "SILFACE (registered trademark) SAG503A" manufactured by Nissin Chemical Industry Co., Ltd.

Examples of a commercially available product of the acetylene-based surfactant include: "OLFINE (registered trademark) E1004", "OLFINE (registered trademark) E1008", and "OLFINE (registered trademark) E1010" manufactured by Nissin Chemical Industry Co., Ltd.; "SURFYNOL (registered trademark) 440", "SURFYNOL (registered trademark) 465", and "SURFYNOL (registered trademark) 485" manufactured by Air Products & Chemicals Inc.; and "Acetylenol (registered trademark) E40" and "Acetylenol (registered trademark) E100" manufactured by Kawaken Fine Chemicals Co., Ltd.

The aqueous ink may contain other surfactants in addition to or instead of the silicone-based surfactant or the acetylene-based surfactant. Examples of the other surfactants include: nonionic surfactants "EMULGEN (registered trademark)" series, "RHEODOL (registered trademark)" series, "EMASOL (registered trademark)" series, "EXCEL (registered trademark)" series, "EMANON (registered trademark)" series, "AMIET (registered trademark)" series, and "AMINON (registered trademark)" series manufactured by Kao Corporation; nonionic surfactants "SORBON (registered trademark)" series manufactured by TOHO Chemical Industry Co., Ltd.; nonionic surfactants "DOBANOX (registered trademark)" series, "LEOCOL (registered trademark)" series, "LEOX (registered trademark)" series, "LAOL, LEOCOL (registered trademark)" series, "LIONOL (registered trademark)" series, "CADENAX (registered trademark)" series, "LIONON (registered trademark)" series, and "LEOFAT (registered trademark)" series manufactured by Lion Corporation; anionic surfactants "EMAL (registered trademark)" series, "LATEMUL (registered trademark)" series, "VENOL (registered trademark)" series, "NEOPELEX (registered trademark)" series, NS SOAP, KS SOAP, OS SOAP, and "PELEX (registered trademark)" series manufactured by Kao Corporation; anionic surfactants "LIPOLAN (registered trademark)" series, "LIPON (registered trademark)" series, "SUNNOL (registered trademark)" series, "LIPOTAC (registered trademark) TE, ENAGICOL" series, "LIPAL (registered trademark)" series, and "LOTAT (registered trademark)" series manufactured by Lion Corporation; and cationic surfactants "CATIOGEN (registered trademark) ES-OW" and "CATIOGEN (registered trademark) ES-L" manufactured by DKS Co. Ltd.

The surfactant may be used alone or in combination of two or more types thereof.

The aqueous ink may further contain, for example, an organic solvent as a solvent other than the water. However, from the viewpoint of reducing a volatile organic compound (VOC), a content of the organic solvent in the aqueous ink can be set to be low, or it can be set to contain no organic solvent.

The aqueous ink may further contain an additive known in the related art, if necessary. Examples of the additive include a pH adjuster, a viscosity modifier, a surface tension regulator, and an antifungal agent. Examples of the viscosity modifier include polyvinyl alcohol, cellulose, and a water-soluble resin.

Next, a fixing agent according to the present invention is a fixing agent for an aqueous ink for ink jet recording, and contains a polylactic acid. When the fixing agent according to the present invention contains a fixing agent component other than the polylactic acid, for example, the component in the aqueous ink other than the polylactic acid may be used.

Next, an ink storage container according to the present invention is an ink storage container containing an aqueous ink for ink jet recording, in which the aqueous ink is the aqueous ink for ink jet recording according to the present invention. As the ink storage container, for example, an ink storage container known in the related art can be used. Examples of the ink storage container include an ink cartridge, tank, and pouch.

Next, an ink jet recording device and an ink jet recording method according to the present invention will be described.

The ink jet recording device according to the present invention is an ink jet recording device including: an ink storage unit; and an ink ejection unit, in which an ink contained in the ink storage unit is ejected by the ink ejection unit, and the ink storage unit contains the aqueous ink for ink jet recording according to the present invention.

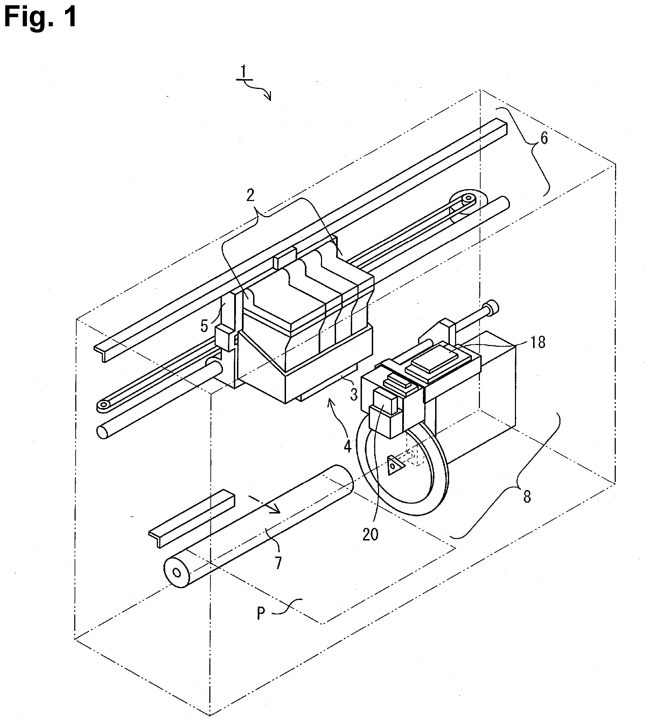

FIGURE shows a configuration of an example of the inkjet recording device according to the present invention. As shown in the FIGURE, an inkjet recording device 1 includes four ink storage units (ink cartridges 2), an ink ejection unit (inkjet head) 3, a head unit 4, a carriage 5, a drive unit 6, a platen roller 7, and a purge device 8 as main components.

The four ink cartridges 2 each contain one color of aqueous ink of four colors: yellow, magenta, cyan, and black. For example, at least one of the four color aqueous inks is the aqueous ink according to the present invention. In this example, a set of four ink cartridges 2 is shown, but instead of this, an integrated ink cartridge which is partitioned so as to form an aqueous yellow ink storage unit, an aqueous magenta ink storage unit, an aqueous cyan ink storage unit, and an aqueous black ink storage unit therein may be used. As a main body of the ink cartridge, for example, an ink cartridge known in the related art can be used.

The ink jet head 3 provided in the head unit 4 performs recording on a recording medium (for example, a recording sheet) P. The four ink cartridges 2 and the head unit 4 are mounted on the carriage 5. The drive unit 6 reciprocates the carriage 5 in a linear direction. As the drive unit 6, for example, a drive unit known in the related art can be used (see, for example, JP2008-246821A). The platen roller 7 extends in a reciprocating direction of the carriage 5 and is disposed in a manner of facing the inkjet head 3.

The ink jet head 3 is formed by stacking a plurality of thin plates made of a metal, for example. A through hole is formed in each of the thin plates. By stacking the plurality of thin plates in which the through hole is formed, a flow path for passing the aqueous ink is formed. The thin plates are bonded by, for example, an adhesive.

The purge device 8 suctions a defective ink containing air bubbles and the like accumulated in the inkjet head 3. As the purge device 8, for example, a purge device known in the related art can be used (see, for example, JP2008-246821A).

A wiper member 20 is disposed adjacent to the purge device 8 on a platen roller 7 side of the purge device 8. The wiper member 20 is formed in a spatula shape and wipes a nozzle forming surface of the ink jet head 3 as the carriage 5 moves. In FIGURE, a cap 18 covers a plurality of nozzles of the ink jet head 3 to be returned to a reset position when recording is completed in order to prevent drying of the aqueous ink.

In the ink jet recording device 1 in this example, the four ink cartridges 2 are mounted on one carriage 5 together with the head unit 4. However, the present invention is not limited thereto. In the ink jet recording device 1, each of the four ink cartridges 2 may be mounted on a carriage different from the head unit 4. In addition, each of the four ink cartridges 2 may be disposed and fixed in the inkjet recording device 1 without being mounted on the carriage 5. In these aspects, for example, each of the four ink cartridges 2 and the head unit 4 mounted on the carriage 5 are connected by a tube or the like, and the aqueous ink is supplied from each of the four ink cartridges 2 to the head unit 4. In addition, in these aspects, four ink bottles each having a bottle shape may be used instead of the four ink cartridges 2. In this case, it is preferable that the ink bottle is provided with an injection port for injecting the ink from an outside to an inside.

Ink jet recording using the ink jet recording device 1 is performed as follows, for example. First, the recording sheet P is fed from a sheet feeding cassette (not shown) provided on a lateral side or a lower side of the inkjet recording device 1. The recording sheet P is introduced between the ink jet head 3 and the platen roller 7. Predetermined recording is performed on the introduced recording sheet P with the aqueous ink ejected from the inkjet head 3. This ejection may be performed, for example, at a first ejection amount as described above, or may be performed at a second ejection amount when a specific condition is satisfied. The recording sheet P after the recording is discharged from the ink jet recording device 1. In FIGURE, a sheet feeding mechanism and a sheet discharging mechanism for the recording sheet P are not shown.

In the device shown in FIGURE, a serial type ink jet head is used, but the present invention is not limited thereto. The inkjet recording device may be a device using a line type ink jet head or roll to roll.

Next, an inkjet recording method according the present invention is an inkjet recording method including a recording step of performing recording by ejecting an aqueous ink to a recording medium by an ink jet method, in which in the recording step, as the aqueous ink, the aqueous ink for ink jet recording according to the present invention is used. The ink jet recording method according to the present invention can be performed by, for example, using the ink jet recording device according to the present invention. The recording includes printing words, printing an image, or printing.

### EXAMPLES

Next, Examples of the present invention will be described together with Comparative Examples. Note that the present invention is not limited or restricted by the following Examples and Comparative Examples.

### (Fixing Resin A)

A fixing resin A is synthesized by reacting a glycol with a polyisocyanate. The acid value was controlled by adjusting a blending ratio and functional groups such as a carboxy group and an amino group. The fixing resin A had an acid value of 48. The acid value was measured according to JIS K2501.

### (Adjustment of Pigment Dispersion Liquid A)

Pure water was added to 20 mass% of a pigment (C.I. Pigment Blue 15:3) and 7 mass% of neutralized sodium hydroxide of a styrene-acrylic acid copolymer (acid value: 50 mgKOH/g, molecular weight: 10000) to make a total of 100 mass%, followed by stirring and mixing, to obtain a mixture. This mixture was charged into a wet sand mill filled with zirconia beads having a diameter of 0.3 mm and subjected to a dispersion treatment for 6 hours. Thereafter, the zirconia beads were removed using a separator, and the resultant was filtered through a cellulose acetate filter having a pore diameter of 3.0 µm to obtain a pigment dispersion liquid A. Note that, the styrene-acrylic acid copolymer is a water-soluble polymer that is generally used as a dispersant for pigments.

### (Examples 1 to 7 and Comparative Examples 1 to 3)

The components in aqueous ink compositions (Table 1) except for a coloring material (coloring agent) were mixed uniformly to obtain an ink solvent. Next, the coloring material was added to the ink solvent, followed by uniform mixing. Thereafter, the obtained mixture was filtered through a cellulose acetate type membrane filter (pore diameter: 3.00 µm) manufactured by TOYO ROSHI KAISHA, LTD. to obtain an aqueous ink for inkjet recording in each of Examples 1 to 7 and Comparative Examples 1 to 3 shown in Table 1.

The (a) viscosity (inkjet ejection property), (b) fixability, and (c) storage stability of the aqueous ink in each of Examples 1 to 7 and Comparative Examples 1 to 3 were evaluated by the following methods.

### (a) Viscosity (Inkjet Ejection Property)

The viscosity was measured at 25°C using a viscometer (model: TVE-25 manufactured by Toki Sangyo Co., Ltd.) and evaluated according to the following evaluation criteria.

### Evaluation criteria for viscosity (inkjet ejection property)

A: the viscosity is 10.0 mPa·s or less
B: the viscosity is more than 10.0 mPa·s

### (b) Fixability

A drawdown was performed on glossy photograph paper (BP71G manufactured by Brother Industries, Ltd.) to obtain an evaluation sample. After drying at room temperature for one day, Cellulose Tape (registered trademark) manufactured by Nichiban Co., Ltd. was attached to the evaluation sample, which was then left at room temperature for 10 minutes and then peeled off at a constant speed. Thereafter, an optical density (OD value) at three locations in a peeling portion of the evaluation sample was measured using a spectrophotometer SpectroEye (light source: D50, viewing angle: 2°, ANSI-T) manufactured by X-Rite, and the average value was obtained and evaluated according to the following evaluation criteria.

### Evaluation criteria for fixability

A: a rate of decrease in optical density (OD value) from before peeling is 5% or less
B: a rate of decrease in optical density (OD value) from before peeling is more than 5% and 10% or less
C: a rate of decrease in optical density (OD value) from before peeling is more than 10%

### (c) Storage Stability

The aqueous ink whose viscosity was measured immediately after preparation was charged into a sealed container and stored for one week in an environment at a temperature of 60°C and a relative humidity of 40%. The viscosity of the evaluation sample thus prepared was measured, and the storage stability was evaluated according to the following evaluation criteria. The viscosity was measured at 25°C using a viscometer (model: TVE-25, manufactured by Toki Sangyo Co., Ltd.).

### Evaluation criteria for storage stability

A: a rate of change in viscosity after one week at 60°C is 5% or less
B: a rate of change in viscosity after one week at 60°C is more than 5%

The environmental friendliness in Table 1 was evaluated according to the following evaluation criteria. Note that, the environmental friendliness evaluation test was performed according to ASTM D5338 (ISO 14855).
A: non-volatile components in the composition contain 60% or more of a raw material having biodegradability
C: non-volatile components in the composition contain less than 60% of a raw material having biodegradability

The volatile organic compound (VOC) in Table 1 was evaluated according to the following evaluation criteria.
A: no organic solvent having a boiling point of 250°C or lower is contained
C: an organic solvent having a boiling point of 250°C or lower is contained

The aqueous ink composition and the evaluation result of the aqueous ink in each of Examples 1 to 7 and Comparative Examples 1 to 3 are shown in Table 1.

**[Table 1]**

| Composition | | Environmental features | Example 1 | Example 2 | Example 3 | Example 4 | Example 5 | Example 6 | Example 7 |
|---|---|---|---|---|---|---|---|---|---|
| Solvent | Water | - | Balance | Balance | Balance | Balance | Balance | Balance | Balance |
| | Methyl ethyl ketone | Organic solvent having boiling point of 79.6°C (corresponding to VOC) | | | | | | | |
| Wetting agent | Glycerin | Prepared by hydrolysis of vegetable oils etc. (having biodegradability) | 5 | 5 | 5 | 5 | 5 | 20 | 5 |
| Surfacta nt | I OLFINE^{®} E1010 | - | 0.4 | 0.4 | 0.4 | 0.4 | 0.4 | 0.4 | |
| | Sunnol^{®} NL-1430 | Having partial biodegradability | | | | | | | 1.4 |
| Fixing agent | Polylactic acid (B) | Plant-based polymer prepared from corn, etc. (having biodegradability) | 7 | 2.5 | 10 | 3 | 5 | 5 | 7 |
| | (Fixing resin A) (*1) | - | | | | | | | |
| Colorin g agent (A) | Pigment dispersion liquid A (*2) | - | 2.5 | 2.5 | 2.5 | 2.5 | 2.5 | 2.5 | 2.5 |
| A/B | | | 0.36 | 1.00 | 0.25 | 0.83 | 0.50 | 0.50 | 0.36 |
| Proportion of raw material having biodegradability in non-volatile components in composition | | | 81% | 72% | 84% | 73% | 78% | 90% | > 75% |
| Effect | Environmental friendliness | | A | A | A | A | A | A | A |
| | A: non-volatile components in composition contain 60% or more of raw material having biodegradability | | | | | | | | |
| | C: non-volatile components in composition contain less than 60% of raw material having biodegradability | | | | | | | | |
| | VOC | | A | A | A | A | A | A | A |
| | A: no organic solvent having boiling point of 250°C or lower is contained | | | | | | | | |
| | C: organic solvent having boiling point of 250°C or lower is contained | | | | | | | | |
| | Inkjet ejection property | | A | A | B | A | A | B | A |
| | A: viscosity is 10.0 mPa·s or less | | | | | | | | |
| | B: viscosity is more than 10.0 mPa·s | | | | | | | | |
| | Fixability | | A | B | A | A | A | A | A |
| | A: rate of decrease in optical density (OD value) from before peeling is 5% or less | | | | | | | | |
| | B: rate of decrease in optical density (OD value) from before peeling is more than 5% and 10% or less | | | | | | | | |
| | C: rate of decrease in optical density (OD value) from before peeling is more than 10% | | | | | | | | |
| | Storage stability | | B | A | B | A | A | A | B |
| | A: rate of change in viscosity after 1 w at 60°C is 5% or less | | | | | | | | |
| | B: rate of change in viscosity after 1 w at 60°C is more than 5% | | | | | | | | |

| Composition | | Environmental features | | Comparative Example 1 | | Comparative Example 2 | | Comparative Example 3 | |
|---|---|---|---|---|---|---|---|---|---|
| Solvent | Water | - | | Balance | | | | Balance | |
| | Methyl ethyl ketone | Organic solvent having boiling point of 79.6°C (corresponding to VOC) | | | | Balance | | | |
| Wetting agent | Glycerin | Prepared by hydrolysis of vegetable oils etc. (having biodegradability) | | 5 | | 5 | | 5 | |
| Surfacta nt | I OLFINE^{®} E1010 | - | | 0.4 | | 0.4 | | 0.4 | |
| | Sunnol^{®} NL-1430 | Having partial biodegradability | | | | | | | |
| Fixing agent | i Polylactic acid (B) | Plant-based polymer prepared from corn, etc. (having biodegradability) | | | | 7 | | | |
| | i (Fixing resin A) (*1) | - | | 7 | | | | | |
| Colorin g agent (A) | Pigment dispersion liquid A (*2) | - | | 2.5 | | 2.5 | | 2.5 | |
| A/B | | | | 0.00 | | 0.36 | | 0.00 | |
| Proportion of raw material having biodegradability in non-volatile components in composition | | | | 34% | | 81% | | 63% | |
| Effect | Environmental friendliness | | | C | | A | | A | |
| | A: non-volatile components in composition contain 60% or more of raw material having biodegradability | | | | | | | | |
| | C: non-volatile components in composition contain less than 60% of raw material having biodegradability | | | | | | | | |
| | VOC | | | A | | C | | A | |
| | A: no organic solvent having boiling point of 250°C or lower is contained | | | | | | | | |
| | C: organic solvent having boiling point of 250°C or lower is contained | | | | | | | | |
| | Inkjet ejection property | | | A | | A | | A | |
| | A: viscosity is 10.0 mPa·s or less | | | | | | | | |
| | B: viscosity is more than 10.0 mPa s | | | | | | | | |
| | Fixability | | | A | | A | | C | |
| | A: rate of decrease in optical density (OD value) from before peeling is 5% or less | | | | | | | | |
| | B: rate of decrease in optical density (OD value) from before peeling is more than 5% and 10% or less | | | | | | | | |
| | C: rate of decrease in optical density (OD value) from before peeling is more than 10% | | | | | | | | |
| | Storage stability | | | A | | B | | A | |
| | A: rate of change in viscosity after 1 w at 60°C is 5% or less | | | | | | | | |
| | B: rate of change in viscosity after 1 w at 60°C is more than 5% | | | | | | | | |

As shown in Table 1, in Examples 1 to 7, the environmental friendliness and the VOC evaluation are "A" or more, and the fixability is "B" or more.

In Examples 1 and 3 to 7 in which the addition amount of the polylactic acid with respect to the total amount of the aqueous ink is 3 mass% or more and 10 mass% or less, the fixability is more excellent than other Examples.

In Examples 4 to 6 in which the mass ratio (A/B) of the content (A) of the pigment to the content (B) of the polylactic acid in the total amount of the aqueous ink is 0.5 or more and 0.85 or less, the fixability and the storage stability are more excellent than other Examples.

In Examples 4 and 5 in which the viscosity of the aqueous ink is 10 mPa s or less, the fixability, the storage stability and the inkjet ejection property are more excellent than other Examples.

On the other hand, the Comparative Example 1 using a chemically synthesized fixing agent component is poorer in environmental friendliness than Examples. In addition, since there is no difference in evaluation results between Comparative Example 2 using methyl ethyl ketone, which is a VOC, and Example 1, Example 1 using only water as a solvent is superior from the viewpoint of protecting the global environment. Comparative Example 3 containing no fixing agent is poor in fixability.

A part or all of the above embodiment and Examples may be described as the following appendixes, but the present invention is not limited thereto.

### (Appendix 1)

An aqueous ink for ink jet recording containing:
water;
a coloring agent; and
a fixing agent, in which
the fixing agent contains a polylactic acid. (Appendix 2)

The aqueous ink for ink jet recording according to Appendix 1, in which the water is a main solvent.

### (Appendix 3)

The aqueous ink for inkjet recording according to Appendix 1 or 2, in which the coloring agent contains a pigment.

### (Appendix 4)

The aqueous ink for ink jet recording according to Appendix 3, in which the fixing agent is for fixing the pigment to a recording medium.

### (Appendix 5)

The aqueous ink for ink jet recording according to any one of Appendixes 1 to 4, in which an addition amount of the polylactic acid is 3 mass% or more and 10 mass% or less with respect to a total amount of the aqueous ink for ink jet recording.

### (Appendix 6)

The aqueous ink for ink jet recording according to Appendix 3 or 4, in which a mass ratio (A/B) of a content (A) of the pigment to a content (B) of the polylactic acid is 0.5 or more and 0.85 or less in a total amount of the aqueous ink for ink jet recording.

### (Appendix 7)

The aqueous ink for ink jet recording according to any one of Appendixes 1 to 6, in which the aqueous ink for ink jet recording has a viscosity of 10 mPa·s or less.

### (Appendix 8)

A fixing agent for an aqueous ink for ink jet recording, the fixing agent containing:
a polylactic acid.

### (Appendix 9)

An ink jet recording method including:
a recording step of performing recording by ejecting an aqueous ink for ink jet recording to a recording medium by an ink jet method, in which
in the recording step, as the aqueous ink for ink jet recording, the aqueous ink for ink jet recording according to any one of Appendixes 1 to 7 is used.

### (Appendix 10)

An ink jet recording device including:
an ink storage unit; and
an ink ejection unit, in which
an ink contained in the ink storage unit is ejected by the ink ejection unit, and
the ink storage unit contains the aqueous ink for ink jet recording according to any one of Appendixes 1 to 7.

### (Appendix 11)

An ink storage container containing an aqueous ink for ink jet recording, in which
the aqueous ink for ink jet recording is the aqueous ink for ink jet recording according to any one of Appendixes 1 to 7.

### INDUSTRIAL APPLICABILITY

As described above, the aqueous ink according to the present invention contains a polylactic acid as a fixing agent, and thus has good environmental friendliness. The aqueous ink according to the present invention is widely applicable to ink jet recording on various recording media.

### REFERENCE SIGNS LIST

- 1: inkjet recording device
- 2: ink cartridge
- 3: ink ejection unit (inkjet head)
- 4: head unit
- 5: carriage
- 6: drive unit
- 7: platen roller
- 8: purge device

## Claims

1. An aqueous ink for ink jet recording comprising:
water;
a coloring agent; and
a fixing agent, wherein
the fixing agent contains a polylactic acid.

2. The aqueous ink for ink jet recording according to claim 1, wherein the water is a main solvent.

3. The aqueous ink for ink jet recording according to claim 1 or 2, wherein the coloring agent contains a pigment.

4. The aqueous ink for ink jet recording according to claim 3, wherein the fixing agent is for fixing the pigment to a recording medium.

5. The aqueous ink for ink jet recording according to claim 1 or 2, wherein an addition amount of the polylactic acid is 3 mass% or more and 10 mass% or less with respect to a total amount of the aqueous ink for ink jet recording.

6. The aqueous ink for ink jet recording according to claim 3, wherein a mass ratio (A/B) of a content (A) of the pigment to a content (B) of the polylactic acid is 0.5 or more and 0.85 or less in a total amount of the aqueous ink for ink jet recording.

7. The aqueous ink for inkjet recording according to claim 1 or 2, wherein the aqueous ink for ink jet recording has a viscosity of 10 mPa·s or less.

8. A fixing agent for an aqueous ink for ink jet recording, the fixing agent comprising:
a polylactic acid.

9. An ink jet recording method comprising:
a recording step of performing recording by ejecting an aqueous ink for inkjet recording to a recording medium by an ink jet method, wherein
in the recording step, as the aqueous ink for ink jet recording, the aqueous ink for ink jet recording according to claim 1 or 2 is used.

10. An ink jet recording device comprising:
an ink storage unit; and
an ink ejection unit, wherein
an ink contained in the ink storage unit is ejected by the ink ejection unit, and
the ink storage unit contains the aqueous ink for ink jet recording according to claim 1 or 2.

11. An ink storage container containing an aqueous ink for ink jet recording, wherein
the aqueous ink for ink jet recording is the aqueous ink for ink jet recording according to claim 1 or 2.
